(19)

Europäisches
Patentamt
European
Patent Office
Office européen
des brevets

(11) **EP 3 182 173 A1**

(12) **EUROPEAN PATENT APPLICATION**

(43) Date of publication:
**21.06.2017 Bulletin 2017/25**

(51) Int Cl.:
$G01V\ 3/28^{(2006.01)}$    $E21B\ 47/08^{(2012.01)}$

(21) Application number: **15290318.3**

(22) Date of filing: **16.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Services Pétroliers Schlumberger**
**75007 Paris (FR)**
Designated Contracting States:
**FR**
• **Schlumberger Holdings Limited**
**Road Town, Tortola (VG)**
Designated Contracting States:
**GB NL**
• **SCHLUMBERGER TECHNOLOGY B.V.**
**2514 JG The Hague (NL)**
Designated Contracting States:
**AL AT BE BG CH CY CZ DE DK EE ES FI GR HR HU IE IS IT LI LT LU LV MC MK MT NO PL PT RO RS SE SI SK SM TR**

(72) Inventors:
• **David, Martin**
**92140 Clamart (FR)**
• **Nichols, Edward**
**92140 Clamart (FR)**

(74) Representative: **Leonori, Céline**
**Etudes et Productions Schlumberger**
**Intellectual Property Department**
**1, rue Henri Becquerel**
**B.P. 202**
**92142 Clamart Cedex (FR)**

(54) **DECONVOLUTION OF ELECTROMAGNETIC THICKNESS MEASUREMENT**

(57)    A tangible, non-transitory, machine-readable medium, includes machine-readable instructions to obtain a measurement relating to a first metal thickness of a casing by passing a transmitter and a receiver of an electromagnetic logging tool over a defect. The tangible, non-transitory, machine-readable medium, also includes machine-readable instructions to obtain a ghosting kernel of the electromagnetic logging tool including a response of the electromagnetic logging tool to a localized change in metal thickness from the first metal thickness of the casing to a second metal thickness, wherein the second thickness is different from the first metal thickness. The tangible, non-transitory, machine-readable medium, further includes machine-readable instructions to determine the metal thickness of the casing at the defect based on the measurement and the ghosting kernel of the electromagnetic logging tool.

FIG. 3

**Description**

## BACKGROUND

The present disclosure relates generally to improving data logging quality of electromagnetic downhole logging tools.

This section is intended to introduce the reader to various aspects of art that may be related to various aspects of the present techniques, which are described and/or claimed below. This discussion is believed to be help provide the reader with background information to facilitate a better understanding of the various aspects of the present disclosure. Accordingly, it should be understood that these statements are to be read in this light, and not as an admission.

In well-logging via electromagnetic field testing, an electromagnetic logging tool is inserted into an interior diameter of a conductive tubular or casing joint ("casing"). A transmitter of the electromagnetic logging tool creates an electromagnetic field that interacts with the casing and varies depending on a metal thickness of the casing. One or more receivers of the electromagnetic logging tool may be used to measure and generate a data log illustrating variations in one or more resulting and returning electromagnetic fields. The metal thickness of the casing may be determined by analyzing the detected variations in the data log. An area of the casing that is determined to have less metal thickness may indicate a defect in the casing (e.g., due to corrosion). However, due to a physical design of the electromagnetic logging tool, the defect may appear more than once (as a "ghost") on the data log.

## SUMMARY

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. Again, the brief summary presented above is intended only to familiarize the reader with certain aspects and contexts of embodiments of the present disclosure without limitation to the claimed subject matter.

In a first embodiment, a system includes a plurality of nested casings disposed in a. wellbore. The system also includes an electromagnetic logging tool disposed in one or more casings of the plurality of nested casings, wherein the electromagnetic logging tool includes one or more transmitters and one or more receivers. The one or more transmitters are configured to generate a magnetic field signal, wherein the magnetic field signal generates one or more eddy currents in the one or more casings, wherein the one or more eddy currents generate one or more returning magnetic field signals. The one or more receivers are configured to measure one or more characteristics of the one or more returning magnetic fields from the one or more of the casings. The system further includes a data processing system communicatively coupled to the electromagnetic logging tool, wherein the data processing system comprises one or more processors. The one or more processors are configured to obtain first data relating to a metal thickness of the one or more of the casings, wherein the data is obtained by moving the logging tool through the one or more casings. The one or more processors are also configured to obtain second data relating to a change in the metal thickness of the one or more casings. The one or more processors are further configured to determine the metal thickness of the casing by applying a deconvolution technique on the first data, using information extracted from the second data.

In a second embodiment, a tangible, non-transitory, machine-readable medium, includes machine-readable instructions to obtain a measurement relating to a first metal thickness of a casing by passing a transmitter and a receiver of an electromagnetic logging tool over a defect. The tangible, non-transitory, machine-readable medium, also includes machine-readable instructions to obtain a ghosting kernel of the electromagnetic logging tool including a response of the electromagnetic logging tool to a localized change in metal thickness from the first metal thickness of the casing to a second metal thickness, wherein the second thickness is different from the first metal thickness. The tangible, non-transitory, machine-readable medium, further includes machine-readable instructions to determine the metal thickness of the casing at the defect based on the measurement and the ghosting kernel of the electromagnetic logging tool..

In a third embodiment, a method includes obtaining, with a receiver of a logging tool, a measurement relating to a first metal thickness of a first casing by moving a logging tool through the first casing, wherein the first casing is coupled to a collar comprising a second metal thickness. The method also includes obtaining, with the receiver of the logging tool, a ghosting kernel of the logging tool based on the first casing and a localized change in metal thickness,from the first metal thickness to the second metal thickness, wherein the ghosting kernel is a response of the logging tool to the localized change in metal thickness. The method further includes determining, with one or more processors of a data processing system, a third metal thickness of the first casing by deconvolving the measurement relating to the first metal thickness and the ghosting kernel of the logging tool, wherein the data processing system is coupled to the logging tool, and wherein the third metal thickness is different from the first metal thickness.

## BRIEF DESCRIPTION OF THE DRAWINGS

Various aspects of this disclosure may be better understood upon reading the following detailed description and upon reference to the drawings in which:

FIG. 1 is a schematic diagram of a system for measuring metal thickness of a casing using a downhole logging tool, in accordance with an embodiment with the present disclosure;

FIG. 2 is a schematic diagram of a cross-section of a logging tool used to measure metal thickness of a casing, in accordance with an embodiment of the present disclosure;

FIG. 3 is a schematic diagram of a system for measuring metal thickness of a casing using a logging tool, in accordance with an embodiment of the present disclosure;

FIG: 4 is a schematic diagram illustrating a system for measuring metal thickness of a casing using a logging tool, in accordance with an embodiment of the present disclosure;

FIG. 5 is a plot of a returning magnetic field signal obtained by a receiver of a logging tool, in accordance with an embodiment of the present disclosure;

FIG. 6 is a schematic diagram of a system for extracting a response of a logging tool to a localized change of metal thickness of a casing, in accordance with an embodiment of the present disclosure;

FIG. 7 is a plot of a returning magnetic field signal obtained by a receiver of a logging tool, in accordance with an embodiment of the present disclosure;

FIG. 8 is a diagram of a method for removing ghosting effects from a data log using deconvolution techniques, in accordance with an embodiment of the present disclosure;

FIG. 9 is a plot of a ghosting kernel and a corresponding deghosting kernel, in accordance with an embodiment of the present disclosure;

FIG. 10 is a plot of a Fourier transform of a ghosting kernel, an inverse of the signal to noise ratio, and the Fourier transform of the ghosting kernel g regularized by the inverse of the signal to noise ratio, in accordance with an embodiment of the present disclosure; and

FIG. 11 is a plot of a deghosted data log, in accordance with an embodiment of the present disclosure.

## DETAILED DESCRIPTION

One or more specific embodiments of the present disclosure will be described below. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Embodiments of the present disclosure relate to systems and methods for measuring metal thicknesses and detecting defects in tubulars or casing joints ("casing") that may be nested or concentrically arranged of a wellbore using a downhole logging tool with a transmitter and at least one receiver to determine a metal thickness of at least an area of the casings. A defect may include a change (e.g., an increase or decrease) of metal thickness of a casing. In particular, the defect in the casing may appear more than once (as a "ghost") on a data log of measurements of the logging tool due to a physical design of the logging tool. The embodiments of the present disclosure relate to removing the ghosting effects using deconvolution techniques.

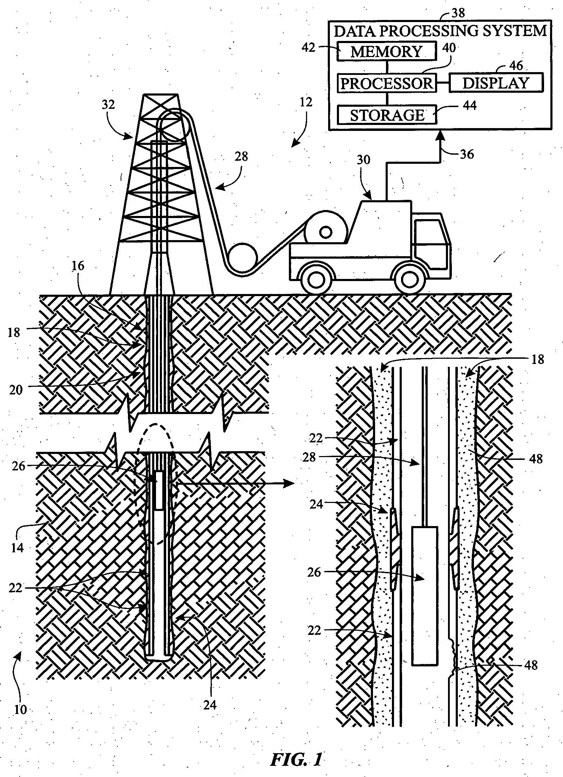

With the foregoing in mind, FIG. 1 is a schematic diagram illustrating a system 10 for measuring metal thickness of a casing using a downhole logging tool 26 (e.g., an electromagnetic logging tool) in accordance with an embodiment. In particular, surface equipment 12 is located above a geological formation 14. A drilling operation has previously been carried out to drill a wellbore 16. In addition, an annular fill 18 has been used to seal an annulus 20-a space between the wellbore 16 and casings 22-with cementing operations. The logging tool 26 may be centered or eccentered, such that a measuring and/or detecting device (e.g., a transmitter or a receiver) of the logging tool 26 is positioned centrally or off-center in the logging tool 26.

As seen in FIG. 1, several casings 22 (also referred to as casing joints 22) are coupled together by collars 24 to stabilize the wellbore 16. The casings 22 represent lengths of pipe, which are conductive and may be formed from steel or similar materials. In one example, each casing 22 may be approximately 13 m or 40 ft long, and may include an externally threaded (male thread form) connection at each end. A corresponding internally threaded (female thread form) connection in the casing collars 24 may connect two casings 22. Coupled in this way, the casings 22 may be assembled to form a casing string to a suitable length and specification for the wellbore 16. The casing 22 and/or collar 24 may be made of carbon steel, stainless steel, or other suitable materials to withstand a variety of forces, such as collapse, burst, and tensile failure, as well as chemically-aggressive fluid. The casing 22 may have magnetic properties and be affected by alternating electromagnetic current.

The surface equipment 12 may carry out various well-logging operations to detect conditions of the casings 22. The well-logging operations may measure a metal thickness of the casing 22 by using the logging tool 26. The example of FIG. 1 shows the logging tool 26 being conveyed through the wellbore 16 by a cable 28. Such a cable 28 may be a mechanical cable, an electrical cable, or an electro-optical cable that includes a fiber line protected against the harsh environment of the wellbore 16. In other examples, however, the logging tool 26 may be conveyed using any other suitable conveyance, such as coiled tubing. The logging tool 26 may generate a time-varying magnetic field signal that interacts with the conductive casing 22 that may have magnetic properties and may be affected by alternating electromagnetic current. The logging tool 26 may be energized from the surface (via the cable 28) or have its own internal power used to emit the time-varying magnetic field signal. The magnetic field signal may travel outward from the logging tool 26 through and along the casing 22. The magnetic field signal from the logging tool 26 may therefore generate eddy currents in the casing 22 that produce corresponding returning magnetic field signals. The logging tool 26 may detect the returning magnetic field signals. At a defect 48, which may be a result of metal gain or loss to the casing 22, the returning magnetic field signal may arrive at the logging tool 26 with a change in phase and/or signal strength (e.g., amplitude) than otherwise. These detected values may be used to create a data log and determine a metal thickness of the casing 22 using suitable electromagnetic and/or field-testing analyses.

The logging tool 26 may be deployed inside the wellbore 16 by the surface equipment 12, which may include a vehicle 30 and a deploying system such as a drilling rig 32. Data related to the casing 22 gathered by the logging tool 26 may be transmitted to the surface, and/or stored in the logging tool 26 for later processing and analysis. The vehicle 30 may be fitted with or may communicate with a computer and software to perform data collection and analysis. When the logging tool 26 provides measurements to the surface equipment 12 (e.g., through the cable 28), the surface equipment 12 may pass the measurements as electromagnetic casing evaluation data 36 to a data processing system 38 that includes one or more processors 40, one or more memory devices 42, storage 44, and/or a display 46. Further references to "the processor 40" are intended to include the one or more processors 40. In some embodiments, the processor 40 may include one or more microprocessors, one or more application specific processors (ASICs), one or more field programmable logic arrays (FPGAs), or any combination thereof. The processor 40 may execute instructions stored in the memory 42 and/or storage 44. As such, the memory 42 and/or the storage 44 of the data processing system 38 may be tangible, non-transitory, machine-readable media that store instructions executable by and data to be processed by the processor 40. The memory 42 and/or the storage 44 may be read-only memory (ROM), random-access memory (RAM), flash memory, an optical storage medium, a hard disk drive, and the like.

The display 46 may be any suitable electronic display that can display the data logs and/or other information relating to analyzing the electromagnetic casing evaluation data 36. In some embodiments, the data processing system 38 obtains the measurements from the logging tool 26 as raw data. In other embodiments, the measurements are processed or pre-processed by the logging tool 26 before sending the data to the data processing system 38. Processing of the measurements may incorporate using and/or obtaining other measurements, such as from ultrasonic, caliper, and/or other electromagnetic logging techniques to better constrain unknown parameters of the casing 22. Accordingly, in some embodiments, the data processing system 38 and/or the logging tool 26 may acquire additional information about the casing 22 or the wellbore 16 including a number of casings 22, nominal metal thicknesses of each casing 22, centering of the casing 22, ultrasonic properties of the casing 22, ambient temperature, caliper measurements, or other parameters that may be useful in analyzing metal thickness of the casing 22.

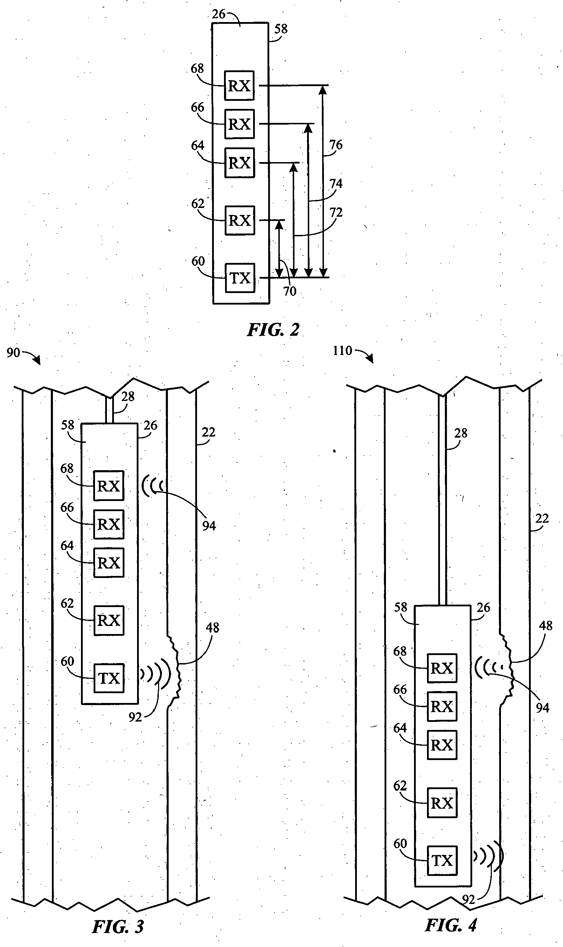

Turning now to FIG. 2, a schematic diagram of a cross-section of the logging tool 26 used to measure metal thickness of a casing, in accordance with an embodiment of the present disclosure, is illustrated. The logging tool 26 may include a housing 58 that encloses the logging tool 26 components. In some embodiments, the housing 58 may be a pressure-resistant housing. Within the housing 58, the logging tool 26 includes a transmitter 60.

The logging tool 26 also may include one or more receivers (e.g., 62, 64, 66, 68). In the illustrated embodiment, the receivers 62, 64, 66, 68 are each located in a line along the logging tool 26. Each receiver 62, 64, 66, 68 is located some distance away from the transmitter 60. For example, the receiver 62 may be located a distance 70 from the transmitter 60, the receiver 64 may be located a distance 72 from the transmitter 60, the receiver 66 may be located a distance 74 from the transmitter 60, and the receiver 68 may located a distance 76 from the transmitter 60. In some embodiments, each distance 72, 74, 76 may be a multiple of the distance 70. For example, the distance 72 may be twice the distance 70, and distances 74, 76 may respectively be three and four times the distance 70. In some embodiments, the receivers 62, 64, 66, 68 may be located at distances of between 0 inches to 120 inches or more from the transmitter 60. For example, the receivers 62, 64, 66, 68 may be located 18, 36, 60, and 90 inches from the transmitter 60. The receivers 62, 64, 66, 68 may detect a strength and/or a phase of the returning magnetic field from the casing 22. These detected values may then be used to create a data log and determine a metal thickness of the casing 22 using suitable electromagnetic and/or field-testing analyses.

As illustrated, the receivers 62, 64, 66, 68 are axially located in the logging tool 26. In some embodiments, the receivers may also or alternatively be radially located or transversely located along an axis of the logging tool 26. In some embodiments, at least some of the receivers 62, 64, 66, 68 may be located azimuthally-adjacent to edges of the logging tool 26. The receivers 62, 64, 66, 68 may use any appropriate magnetic field detection technique, such as coiled-winding, Hall-effect sensor, giant magneto-resistive sensor, or any other magnetic field measuring instrument. In some embodiments, multiple receivers distributed azimuthally enable generating a two-dimensional image of properties (e.g., metal thickness) of the casing 22. There may be embodiments having multiple transmitter configurations where the windings are transverse or obliques as in a saddle coil arrangement which couple to the receivers or additional receiver windings.

Turning now to FIG. 3, a schematic diagram of a system 90 for measuring metal thickness of a casing using a logging tool 26, in accordance with an embodiment of the present disclosure, is illustrated. The logging tool 26 may be conveyed through the casing 22 by the cable 28. In the example shown in FIG. 3, it may be understood that the logging tool 26 descends through the casing 22. The logging tool 26 may be conveyed by descending or ascending through the casing 22. As the logging tool 26 descends through the casing 22, the transmitter 60 may generate a time-varying magnetic field signal 92 that interacts with the conductive casing 22 that may have magnetic properties and may be affected by alternating electromagnetic current. The magnetic field signal 92 may travel outward from the transmitter 60 through and along the casing 22. The magnetic field signal 92 from the logging tool 26 may generate eddy currents in the casing 22 that produce corresponding returning magnetic field signals (e.g., 94). The receivers 62, 64, 66, 68 of the logging tool 26 may detect the returning magnetic field signals. For example, as shown in FIG. 3, as the transmitter 60 passes the defect 48 in the casing 22, the transmitter 60 may generate the magnetic field signal 92 which may result in the returning magnetic field signal 94 that may be detected by the receiver 68 of the logging tool 26. Additional returning magnetic field signals may also be produced by the transmitter 60 and be detected by additional receivers (e.g., 62, 64, 66) of the logging tool 26. As the transmitter 60 passes the defect 48, which may be a result of metal addition or reduction to the casing 22, the returning magnetic field signal 94 may arrive at the receiver 68 with a shift of phase and/or a change in signal strength (e.g., amplitude) than otherwise.

With the foregoing in mind, FIG. 4 is a schematic diagram illustrating a system 110 for measuring metal thickness of a casing 22 using a logging tool 26 in accordance with an embodiment of the present disclosure. As the logging tool 26 travels through the casing 22, the receiver 68 may pass the defect 48 in the casing 22. The transmitter 60 may generate the time-varying magnetic field signal 92 that interacts with the conductive casing 22 that may have magnetic properties and may be affected by alternating electromagnetic current. The magnetic field signal 92 may travel outward from the logging tool 26 through and along the casing 22. The magnetic field signal 92 emitted from the transmitter 60 may generate eddy currents in the casing 22 that produce corresponding returning magnetic field signals (e.g., 94). The receivers 62, 64, 66, 68 of the logging tool 26 may detect the returning magnetic field signals. For example, the transmitter 60 may generate the magnetic field signal 92 which may result in the returning magnetic field signal 94 that may be detected by the receiver 68 of the logging tool 26. Additional returning magnetic field signals may also be generated as a result of the magnetic field signal 92 emitted from the transmitter 60 and be detected by additional receivers (e.g., 62, 64, 66) of the logging tool 26. As the transmitter 60 passes the defect 48, which may be a result of metal addition or reduction to the casing 22, the returning magnetic field signal 94 may arrive at the receiver 68 with a phase shift and/or signal strength change than otherwise. This phenomenon may be observed not only at the collar 24 (due to its increase of metal thickness when coupled to the casing 22), but also at other completion components. As such, the phase shift and attenuation of the returning magnetic field signal 94 may be used to identify the location of the collar 24 and other completion components.

The logging tool 26 and/or the data processing system 38 may use the detected values to create a data log and determine a metal thickness of the casing(s) 22 using any suitable electromagnetic and/or field-testing analyses. In some embodiments, minimizing a norm of the difference (e.g., least-squares minimization) between the observed data and data from a numerical model yields best-fit parameters for the model of the casing 22. Various solution implementations, such as inversion, model-searching, simulated annealing, or other suitable techniques, may be used to interpret the data. Choosing a particular method to use relates to speed, complexity, and memory size for solving the minimization and may vary by implementation based on application specific choices.

In some embodiments, the data processing system 38 and/or the logging tool 26 may determine a change in metal thickness to the casing 22 as well as determine various properties of one or more casings 22. For example, additional information may be derived or used by the data processing system 38 and/or the logging tool 26 to determine metal thickness of the casing 22, such as thermal data, deviation survey results, caliper surveys of diameters, temperature, acoustic information, electromagnetic information (e.g., permeability and/or conductivity), or other suitable auxiliary information.

However, due to a physical design of the logging tool 26, the defect 48 may appear more than once (as a "ghost") on the data log. In particular, as the logging tool 26 descends in the casing 22, the transmitter 60 may pass the defect 48 in the casing 22 and generate the magnetic field signal 92. Based on the returning magnetic field 94 detected at a receiver (e.g., 68) of the logging tool 26, the data log may show an change in the returning magnetic field signal strength and/or phase because of a change in metal thickness of the casing 22. In some embodiments, the change in the returning magnetic field signal strength and/or phase may be compared to a threshold to confirm an indication of the change in metal thickness of the casing 22. As the logging tool 26 continues to descend in the casing 22, the receiver 62 passes the defect 48. The transmitter 60 may again generate the magnetic field signal 92 as the transmitter 60 passes the defect 48. Again, based on the returning magnetic field 94 detected at the receiver (e.g., 68), the data log may show a change in the phase shift and/or the signal strength of the returning magnetic field 94 because of the change in metal thickness of the casing 22.

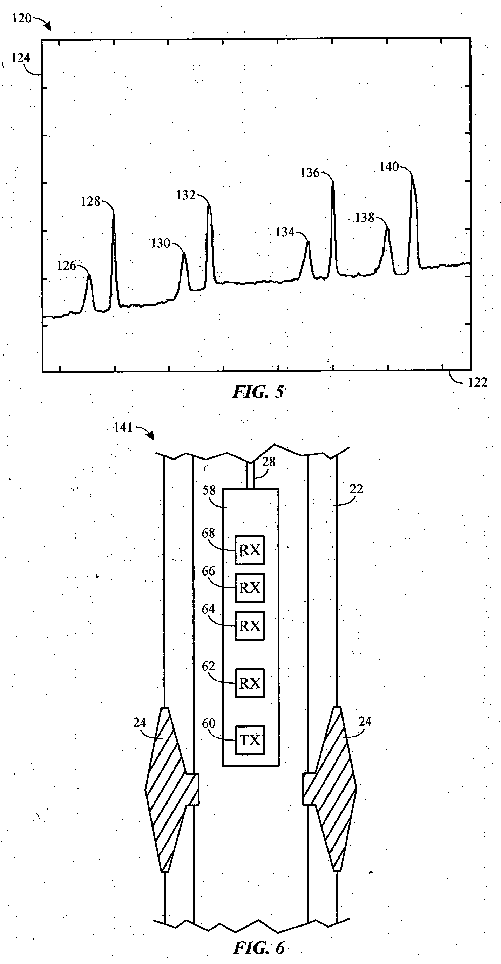

With the foregoing in mind, FIG. 5 is a plot 120 of the returning magnetic field signal 94 obtained by a receiver (e.g., 68) of the logging tool 26 as the logging tool 26 travels in the casing 22, with a horizontal axis 122 representing depth in the Casing 22 and a vertical axis 124 representing signal strength, in accordance with an embodiment of the present disclosure. As the logging tool descends in the casing 22, the logging tool 26 may pass a first defect in the casing 22. As the transmitter 60 passes the first defect (e.g., as shown in FIG. 3 where the transmitter 60 passes the defect 48), a first amplitude 126 in the returning magnetic field signal strength may be realized in the plot 120 due to a change in metal thickness of the casing 22. As the receiver passes the first defect (e.g., as shown in FIG. 4 where the receiver 68 passes the defect 48), a second amplitude 128 in the returning magnetic field signal strength may be realized in the plot 120 due to a change in metal thickness of the casing 22. The transmitter 60 may be of a greater length than the receiver 68. As a result, the first amplitude 126 may be broader in shape (over the depth of the casing 22) and smaller in amplitude than the second amplitude 128, while the second amplitude 128 may appear sharper than the first amplitude 126. In some embodiments, the transmitter 60 may be of an equal or lesser length than the receiver 68. In some embodiments, the first defect may appear several feet apart on the data log due to the transmitter 60 being spaced from the receiver 68 over several feet.

Similarly, as the logging tool 26 continues descending in the casing 22, the logging tool 26 may pass a second defect in the casing 22. A third amplitude 130 in the plot 120 may correspond to the transmitter 60 passing the second defect and a fourth amplitude 132 in the plot 120 may correspond to the receiver 68 passing the second defect. As the logging tool 26 continues descending in the casing 22, the logging tool 26 may pass a third defect in the casing 22. A fifth amplitude 134 in the plot 120 may correspond to the transmitter 60 passing the third defect and a sixth amplitude 136 in the plot 120 may correspond to the receiver 68 passing the third defect. As the logging tool 26 continues descending in the casing 22, the logging tool 26 may pass a fourth defect in the casing 22. A seventh amplitude 138 in the plot 120 may correspond to the transmitter 60 passing the fourth defect and an eighth amplitude 140 in the plot 120 may correspond to the receiver 68 passing the fourth defect.

The plot 120, which may correspond to a data log of the logging tool 26, illustrates a ghosting effect based on the transmitter 60/receiver (e.g., 68) arrangement of the logging tool 26, wherein a defect (e.g., the first defect) is represented more than once in the data log. The ghosting effect is due to the defect appearing in the data log once (e.g., the first amplitude 126) when the transmitter 60 passes the defect; and again (e.g., the second amplitude 128) when the receiver passes the defect.

The present disclosure proposes using deconvolution techniques to remove the ghosting effect in the data log. Removing the ghosting effect may facilitate interpretation of the data log by enabling more accurate identification of defects in the casing 22 and limit detrimental impacts of predetermined changes in metal thickness of the casing 22 to the data log (e.g., through the use of the collar 24).

The measurements provided by the logging tool 26 (e.g., the data log) may be interpreted as a convolution between the actual metal thickness of the casing and an intrinsic response of the logging tool 26 to a localized change in metal thickness. The measurements provided by the logging tool 26 are denoted below as the measured data *h,* the actual metal thickness of the casing is denoted as the true metal thickness *f*, and the intrinsic response of the logging tool 26 to the localized change in metal thickness is denoted as the ghosting kernel g. Advantageously, this approach may use a single receiver for deghosting. Furthermore, as high frequency noise may be damped by the disclosed technique, possible amplitudes present in the data log may not be amplified.

The convolution between the actual metal thickness of the casing and the ghosting kernel is a linear operation which may result in integrating a product of two functions. In particular, a first function is the ghosting kernel g and a second function is the actual metal thickness of the casing *f*. The result of the convolution is the measured data *h*:

$$h = g \otimes f \qquad \text{(Equation 1)}$$

The convolution of these functions, which are indexed by depth, corresponds to a multiplication of the associated Fourier transforms. The previous formula may therefore be written:

$$\hat{h} = \hat{g} \times \hat{f} \qquad \text{(Equation 2)}$$

The actual metal thickness of the casing *f* may be reconstructed by performing an inverse Fourier transform of the previous equation:

$$f = \mathcal{F}^{-1}\left(\frac{1}{\hat{g}}\right) \otimes h \qquad \text{(Equation 3)}$$

The $\frac{1}{\hat{g}}$ term on the left of the convolution operator may be described as the "deghosting" kernel.

To implement Equation 3, it may be useful to first determine the ghosting kernel g, i.e., the intrinsic response of the logging tool 26 to a localized predetermined change in metal thickness of the casing 22. For example, the localized predetermined change in metal thickness may be a single collar 24 on a casing string (which may change the metal thickness measured by the logging tool 26 from a metal thickness of the casing 22 to a metal thickness of the collar 24 coupled to the casing 22). In some embodiments, the collar 24 appears as additional metal thickness on the casing 22 and may measure approximately six inches long. Determining data related to the response of the logging tool 26 to the collar 24 may be achieved by extracting the data from a data log of the response of the logging tool 26. In some embodiments, the data related to the response of the logging tool 26 to the collar 24 may be achieved by other techniques, including modeling the data based on simulating the response of the logging tool 26, numerical simulation, experimental testing in a dedicated setup, selecting the data from a lookup table or database, or any combination thereof. The response of the logging tool 26 to the collar 24 may correspond to the ghosting kernel g, for which the Fourier transform may be computed.

With the foregoing in mind, FIG. 6 is a schematic diagram illustrating a system 141 for obtaining the response of the logging tool 26 to a localized change of metal thickness by measuring the metal thickness of the collar, in accordance with an embodiment of the present disclosure. The system 141 may be used in a controlled environment (e.g., a laboratory) in which the location and dimensions of the collar 24 are well-known. In some embodiments, the system 141 may be used on-site (e.g., at the wellbore 16). The logging tool 26 may be lowered using the cable 28 into the casing 22, such that the logging tool 26 passes the collar 24. Measurements may be taken and a data log generated as the transmitter 60 and a receiver (e.g., 68) pass the collar 24. The data log may be used to extract the response of the logging tool 26 to the localized change in metal thickness, such that the ghosting kernel g may be determined.

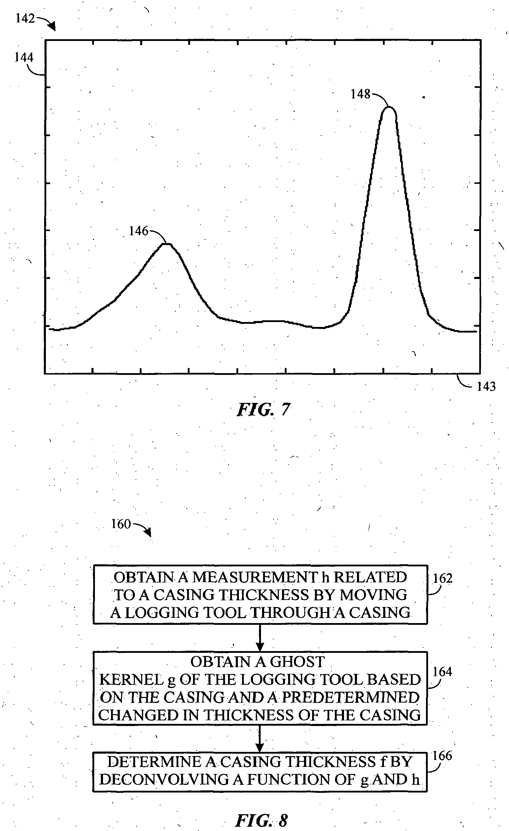

Turning now to FIG. 7, a plot 142 of the returning magnetic field signal 94 obtained by a receiver (e.g., 68) of the logging tool 26 as the logging tool 26 descends in the casing 22 and passes the collar 24, with a horizontal axis 143 representing depth in the casing 22 and a vertical axis 144 representing signal strength, in accordance with an embodiment of the present disclosure, is illustrated. In particular, the plot 142, which may correspond to a data log of the logging tool 26, shows a first amplitude 146 as the transmitter 60 passes the collar 24 and a second amplitude as the receiver 68 passes the collar 24. The transmitter 60 may be of a greater length than the receiver 68. As a result, the first amplitude 126 may be broader in shape (over the depth of the casing 22) and smaller in amplitude than the second amplitude 128, while the second amplitude 128 may appear sharper than the first amplitude 126. In some embodiments, the transmitter 60 may be of an equal or lesser length than the receiver 68. In some embodiments, the collar 24 may appear as a several feet long anomaly on the data log due to the transmitter 60 being spaced from the receiver 68 over several feet. A localized defect of the casing 22 may appear similarly to the plot 142 of the collar 24. The plot 142 of the returning magnetic field signal 94 as the logging tool 26 passes the collar 24 may thus be used as a basis for determining the ghosting kernel *g*.

Turning now to FIG. 8, a diagram of a method 160 for removing the ghosting effects from the data log using deconvolution techniques, in accordance with an embodiment of the present disclosure, is illustrated. The logging tool 26 may obtain (block 162) a measurement *h* of related to a metal thickness of one or more casings by moving the logging tool 26 through the one or more casings 22. The one or more casings 22 may be concentrically arranged or nested, such that the metal thickness may correspond to a metal thickness of a single casing or a total effective thickness of two or more casings that are nested. The logging tool 26 may be raised or lowered by the cable 28 through the one or more casings 22. As the logging tool 26 travels through the one or more casings 22, the transmitter 60 of the logging tool 26 may generate a time-varying magnetic field signal 92 that interacts with the one or more casings 22 that may have magnetic properties and may be affected by alternating electromagnetic current. The magnetic field signal 92 may travel outward from the logging tool 26 through and along the one or more casings 22. The magnetic field signal 92 emitted from the transmitter 60 may generate eddy currents in the one or more casings 22 that produce corresponding returning magnetic field signals (e.g., 94). A receiver (e.g., 68) of the logging tool 26 may detect the returning magnetic field signals. For example, as shown in FIG. 3, as the transmitter 60 passes the defect 48 in the one or more casings 22, the transmitter 60 may generate the magnetic field signal 92 and result in the returning magnetic field signal 94 that may be detected by the receiver 68 of the logging tool 26. Additional returning magnetic field signals may also be generated as a result of the magnetic field signal 92 emitted from the transmitter 60 and be detected by additional receivers (e.g., 62, 64, 66) of the logging tool 26. The transmitter 60 may pass the defect 48, which may be a result of metal loss in the one or more casings 22. The corresponding returning magnetic field signal 94 may arrive at the receiver 68 with phase shift and/or signal strength change than otherwise. Phase I shift and attenuation of the returning magnetic field signal 94 may change as the metal thickness changes. As seen in FIG. 5, the resulting data log may include a first amplitude 126 corresponding to the transmitter 60 passing the defect 48 and a second amplitude 128 corresponding to the receiver 68 passing the defect 48.

The logging tool may also obtain (block 164) a ghosting kernel g of the logging tool 26 based on the one or more casings 22 and a predetermined change in metal thickness of the one or more casings 22. For example, the predetermined change in metal thickness of the one or more casings 22 may be provided by using a collar 24 on a casing string (which may change the metal thickness measured by the logging tool 26 from a metal thickness of the one or more casings 22 to a metal thickness of the collar 24 coupled to the one or more casings 22). In some embodiments, the collar 24 appears as additional metal thickness on the one or more casings 22 and may measure approximately six inches long. Determining the ghosting kernel g of the logging tool 26 to the collar 24 may be achieved by modeling, simulation, numerical simulation, experimental testing in a dedicated setup, extracting the response from a data log, selection from a lookup table or database, or any combination thereof.

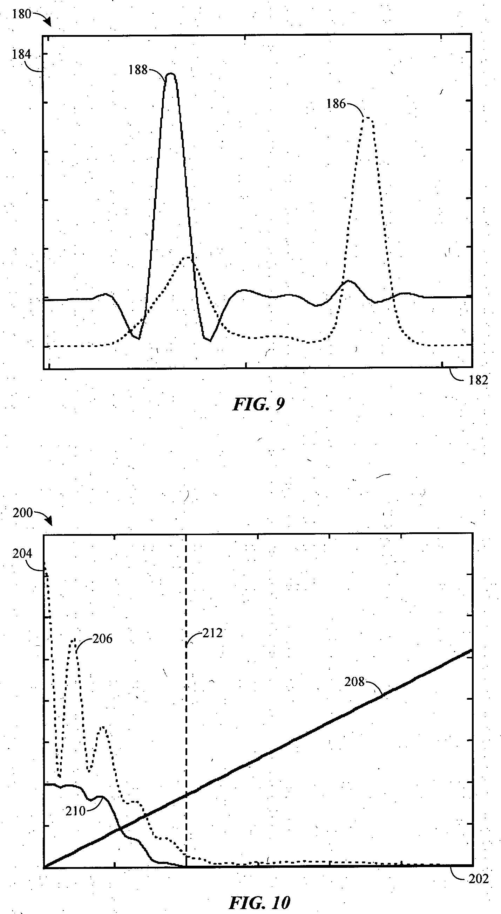

A processor, such as the processor 40 of the data processing system 38, may then determine (166) a metal thickness of the one or more casings *f* at the defect 48 by deconvolving a function of g and *h.* In particular, the metal thickness of the one or more casings *f* may be determined by using the Equations 1-3 as discussed above, such that Equation 2 is convolved with the "inverse" of the ghosting kernel, which is denoted as the deghosting kernel. FIG. 9 is a plot 180 of the ghosting kernel g and the corresponding deghosting kernel, with an ordinate 182 representing amplitude in relation to an abscissa 184 representing depth in the one or more casings 22, in accordance with an embodiment of the present disclosure. In particular, a first waveform 186 represents the ghosting kernel g, i.e., the returning magnetic field signal 94 obtained by a receiver of the logging tool 26 as the logging tool 26 descends in the one or more casings 22 and passes the collar 24, as illustrated in FIG. 7. A second waveform 188 represents the deghosting kernel, the "inverse" of the ghosting kernel g.

In some embodiments, because of noise in the measured data *h*, Equation 3 may not be applied directly. One standard method that may be applied to Equation 3 for deconvolution is called the Wiener Deconvolution. Alternate deconvolution techniques may also be used, such as the Richardson-Lucy deconvolution, the free deconvolution, etc. The Wiener Deconvolution relies on *a priori* knowledge of the ghosting kernel *g* and noise level in the measured data *h* It can be written as follows:

$$f = \mathcal{F}^{-1}\left(\frac{1}{\hat{g}} \frac{|\hat{g}|^2}{|\hat{g}|^2 + 1/\widehat{SNR}}\right) \otimes h \qquad \text{(Equation 4)}$$

In this relation, *SNR* is a signal to noise ratio of a system as a function of frequency. The signal to noise ratio *SNR* regularizes a response of the deghosting filter in frequency bands where the noise dominates the signal (e.g., the measured data *h*).

With the foregoing in mind, FIG. 10 is a plot 200 of the Fourier transform of the ghosting kernel *g*, the inverse of the signal to noise ratio 1/*SNR,* and the Fourier transform of the ghosting kernel *g* regularized by the inverse of the signal to noise ratio 1/*SNR,* with an ordinate 202 representing amplitude in relation to an abscissa 184 representing wavenumber, in accordance with an embodiment of the present disclosure. A first waveform 206 represents the Fourier transform of the ghosting kernel *g*, as referenced in Equation 2. In this example, the first waveform 206 indicates that metal thickness oscillations with a wavelength less than approximately an inverse of wavenumber 212 do not appear in the data log due to averaging of the signal (e.g., the measured data *h*) over a certain length. For longer defects, the first waveform 206 evidences a number of amplitudes due to the ghosting effect, which may amplify some wavelengths while damping others. To compensate for the ghosting effect, a model for the noise to signal ratio (i.e., the inverse of the signal to noise ratio 1/*SNR*) with respect to wavelength may be assumed. In some embodiments, it may be assumed that the noise to signal ratio increases linearly with the wavenumber. The model for the noise to signal ratio may be plotted as shown by a second waveform 208. The third waveform 210 is the ratio of $g^2/(g^2+1/SNR)$, which may be interpreted as a deconvolution fidelity. The deconvolution fidelity is equal to 1 when the actual metal thickness of the casing is perfectly reconstructed (i.e., for low wavenumbers) and close to 0 when reconstruction is not possible (i.e., for very high wavenumbers). As illustrated, the third waveform 210 exhibits a reduction in high frequency noise, while desirably preserving global changes of metal thickness.

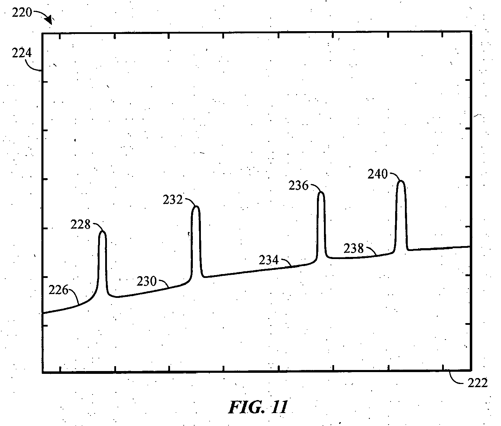

Turning now to FIG. 11, a plot 220 of a deghosted data log, with an ordinate 222 representing signal strength in relation to an abscissa 224 representing depth in the casing 22, in accordance with an embodiment of the present disclosure, is illustrated. For example, the data log (before deghosting) may be the returning magnetic signal 94 as seen in the plot 120 in FIG. 5. That is, the data log may be the returning magnetic field signal 94 obtained by a receiver (e.g., 68) of the logging tool 26 as the logging tool 26 descends in the casing 22 and include the logging tool 26 passing a defect 48 in the casing 22. The data log may be deghosted using the deconvolution techniques and the ghosting kernel *g* as derived by Equations 1-3. The deconvolution techniques may include reducing the noise in the data measured by the receiver, as illustrated by Equation 4. The plot 220 illustrates a first reduced ghost amplitude 226 and a first peak amplitude 228 in response to the transmitter 60 and the receiver 68 of the logging tool 26 passing a first defect. Similarly, the plot 220 illustrates a second reduced ghost amplitude 226 and a second peak amplitude 228 in response to the transmitter 60 and the receiver 68 of the logging tool 26 passing a second defect. The plot 220 also illustrates a third reduced ghost amplitude 226 and a third peak amplitude 228 in response to the transmitter 60 and the receiver 68 of the logging tool 26 passing a third defect. The plot 220 further illustrates a fourth reduced ghost amplitude 226 and a fourth peak amplitude 228 in response to the transmitter 60 and the receiver 68 of the logging tool 26 passing a fourth defect. Reducing the ghosting effect in this manner may facilitate interpretation of the data log by enabling more accurate identification of defects in the casing 22 and limit detrimental impact of predetermined changes in metal thickness to the casing of the data log (e.g., through the use of the collar 24).

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents; and alternatives falling within the spirit and scope of this disclosure.

**Claims**

1. A system comprising:

> a plurality of nested casings disposed in a wellbore;
> an electromagnetic logging tool disposed in one or more casings of the plurality of nested casings, wherein the electromagnetic logging tool comprises one or more transmitters and one or more receivers, wherein:

>> the one or more transmitters are configured to generate a magnetic field signal, wherein the magnetic field signal generates one or more eddy currents in the one or more casings, wherein the one or more eddy currents generate one or more returning magnetic field signals; and
>> the one or more receivers are configured to measure one or more characteristics of the one or more returning magnetic fields from the one or more of the casings; and

> a data processing system communicatively coupled to the electromagnetic logging tool, wherein the data processing system comprises one or more processors, wherein the one or more processors are configured to:

obtain first data relating to a metal thickness of the one or more of the casings, wherein the data is obtained by moving the electromagnetic logging tool through the one or more casings;

obtain second data relating to a change in the metal thickness of the one or more casings; and

determine the metal thickness of the casing by applying a deconvolution technique on the first data, using information extracted from the second data.

2. The system of claim 1, wherein at least one casing of the one or more casings is coupled to another casing of the plurality of nested casings by a collar, and wherein the change in the metal thickness of the one or more casings is predetermined and due to a presence of the collar.

3. The system of claims 1 or 2, wherein the one or more processors are configured to determine the metal thickness of the casing by applying a deconvolution technique on the first data, using information extracted from the second data, to substantially remove a ghosting effect in the first data.

4. The system of any of the above claims, wherein the one or more processors are configured to determine the metal thickness of the casing by applying a deconvolution technique on the first data, using information extracted from the second data, by subtracting the second data from the first data to substantially remove a ghosting effect in the first data.

5. The system of any of the above claims, wherein each casing of the plurality of nested casings comprises magnetic properties and is affected by alternating electromagnetic current.

6. The system of any of the above claims, wherein the one or more processors obtains the second data by extracting the second data from the first data, by modeling the second data based on a tool response simulation, by selecting the second data from a lookup table or database, or by combinations thereof.

7. A tangible, non-transitory, machine-readable medium, comprising machine-readable instructions to:

obtain a measurement relating to a first metal thickness of a casing by passing a transmitter and a receiver of an electromagnetic logging tool over a defect;

obtain a ghosting kernel of the electromagnetic logging tool comprising a response of the electromagnetic logging tool to a localized change in metal thickness from the first metal thickness of the casing to a second metal thickness, wherein the second metal thickness is different from the first metal thickness; and

determine the metal thickness of the casing at the defect based on the measurement and the ghosting kernel of the electromagnetic logging tool.

8. The machine-readable medium of claim 7, comprising machine-readable instructions to determine the metal thickness of the casing at the defect by deconvolving the measurement with the ghosting kernel.

9. The machine-readable medium of claims 7 or 8, comprising machine-readable instructions to determine the metal thickness of the casing at the defect by deconvolving the measurement with the ghosting kernel using the Wiener deconvolution technique, the Richardson-Lucy deconvolution technique, or the free deconvolution technique.

10. The machine-readable medium of any of claims 7-9, wherein obtaining the measurement relating to the first metal thickness of the casing comprises receiving a first magnetic field signal emitted by the transmitter at the receiver when the transmitter or the receiver passes over the defect, wherein a first returning magnetic field signal comprises more phase shift than a second magnetic field signal emitted by the transmitter and received at the receiver when the transmitter or the receiver passes over a portion of the casing that does not comprise the defect.

11. The machine-readable medium of any of claims 7-10, wherein obtaining the measurement relating to the first metal thickness of the casing comprises receiving a first magnetic field signal emitted by the transmitter at the receiver when the transmitter or the receiver passes over the defect, wherein a first returning magnetic field signal comprises more attenuation than a second magnetic field signal emitted by the transmitter and received at the receiver when the transmitter or the receiver passes over a portion of the casing that does not comprise the defect.

12. The machine-readable medium of any of claims 7-11, comprising machine-readable instructions to determine the metal thickness of the casing at the defect by subtracting the ghosting kernel from the measurement to remove a ghosting effect of the defect on the measurement.

13. The machine-readable medium of any of claims 7-12, wherein the second metal thickness corresponds to a metal thickness of a collar coupled to the casing.

14. The machine-readable medium of claim any of claims 7-13, wherein obtaining the ghosting kernel of the electromagnetic logging tool comprises extracting a response of the electromagnetic logging tool to the localized change in metal thickness from the first metal thickness to the second metal thickness from the measurement.

15. The machine-readable medium any of claims 7-14, wherein obtaining the ghosting kernel of the electromagnetic logging tool comprises simulating or modeling a response of the electromagnetic logging tool to the localized change in metal thickness from the first metal thickness to the second metal thickness.

DATA PROCESSING SYSTEM
MEMORY
PROCESSOR — DISPLAY
STORAGE

*FIG. 1*

...

**FIG. 2**

**FIG. 3**

**FIG. 4**

**FIG. 5**

**FIG. 6**

**FIG. 7**

OBTAIN A MEASUREMENT h RELATED TO A CASING THICKNESS BY MOVING A LOGGING TOOL THROUGH A CASING — 162

OBTAIN A GHOST KERNEL g OF THE LOGGING TOOL BASED ON THE CASING AND A PREDETERMINED CHANGED IN THICKNESS OF THE CASING — 164

DETERMINE A CASING THICKNESS f BY DECONVOLVING A FUNCTION OF g AND h — 166

**FIG. 8**

**FIG. 9**

**FIG. 10**

FIG. 11

Europäisches
Patentamt

European
Patent Office

Office européen
des brevets

# EUROPEAN SEARCH REPORT

Application Number

EP 15 29 0318

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/127274 A1 (LEGENDRE EMMANUEL [FR] ET AL) 7 May 2015 (2015-05-07) | 1-5 | INV.<br>G01V3/28 |
| Y | * abstract * | 6 | |
| A | * paragraph [0005] - paragraph [0007] *<br>* paragraph [0023] *<br>* paragraph [0044] *<br>* claims 12, 14 *<br>* figures 4,5 * | 7-15 | ADD.<br>E21B47/08 |
| Y | US 5 270 647 A (BEISSNER ROBERT [US] ET AL) 14 December 1993 (1993-12-14)<br>* abstract *<br>* column 5, line 57 - line 62 * | 6 | |
| A | US 2009/195244 A1 (MOUGET PIERRE [FR] ET AL) 6 August 2009 (2009-08-06)<br>* the whole document * | 1-15 | |
| A | US 2011/085743 A1 (LEI ZHICHUN [DE] ET AL) 14 April 2011 (2011-04-14)<br>* paragraph [0032] * | 9 | |

TECHNICAL FIELDS
SEARCHED (IPC)

E21B
G01V

The present search report has been drawn up for all claims

| Place of search | Date of completion of the search | Examiner |
|---|---|---|
| The Hague | 13 April 2016 | Lameloise, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 29 0318

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2016

| Patent document cited in search report | | Publication date | Patent family member(s) | | Publication date |
|---|---|---|---|---|---|
| US 2015127274 | A1 | 07-05-2015 | BR | PI1013279 A2 | 05-04-2016 |
| | | | CA | 2765293 A1 | 06-01-2011 |
| | | | EP | 2270420 A1 | 05-01-2011 |
| | | | RU | 2012102933 A | 10-08-2013 |
| | | | US | 2012095686 A1 | 19-04-2012 |
| | | | US | 2015127274 A1 | 07-05-2015 |
| | | | WO | 2011000500 A1 | 06-01-2011 |
| US 5270647 | A | 14-12-1993 | JP | H05240841 A | 21-09-1993 |
| | | | US | 5270647 A | 14-12-1993 |
| US 2009195244 | A1 | 06-08-2009 | CA | 2632085 A1 | 14-06-2007 |
| | | | EP | 1795920 A1 | 13-06-2007 |
| | | | US | 2009195244 A1 | 06-08-2009 |
| | | | WO | 2007065667 A1 | 14-06-2007 |
| US 2011085743 | A1 | 14-04-2011 | CN | 102044067 A | 04-05-2011 |
| | | | KR | 20110040707 A | 20-04-2011 |
| | | | US | 2011085743 A1 | 14-04-2011 |

EPO FORM P0459

For more details about this annex : see Official Journal of the European Patent Office, No. 12/82